# EUROPEAN PATENT APPLICATION

(11) **EP 0 848 514 A2**
(43) Date of publication of application: **17.06.1998**
(21) Application number: 97310177.7
(22) Date of filing: 16.12.1997
(51) Int. Cl.: H04J 14/02, H04B 10/155

(54) **Wavelength division multiplex optical transmitter capable of supressing degradation of optical SN**

(30) Priority: 16.12.1996 JP 336083/96
(71) Applicant: NEC CORPORATION, Tokyo (JP)
(72) Inventor: Mikami, Satoshi, Minato-ku, Tokyo (JP)
(74) Representative: Moir, Michael Christopher

(57) **Abstract**

In a wavelength division multiplex optical transmitter for multiplexing a plurality of input optical signals to produce an output optical signal, use is made of a plurality of optical band pass filters (BPF1-BPFn) each of which is inserted between an optical amplifier (AMP1-AMPn) and an output side optical coupler (CPL). The input optical signals are different from one another in wavelength and are supplied with input optical modulator sections (MOD1-MODn, SCR1-SCRn), respectively. The optical modulator sections modulate the input optical signals into a plurality modulated optical signals. The optical amplifiers amplify the modulated optical signals into amplified signals. The optical band pass filters filter the amplified optical signals into filtered optical signals. The output side optical coupler multiplexes the filtered optical signals to produce the output optical signal.

## Description

### Background of the Invention:

The present invention relates to a wavelength division multiplex optical transmission system for wavelength multiplexing optical signals for transmission and, in particular, to a transmitter thereof.

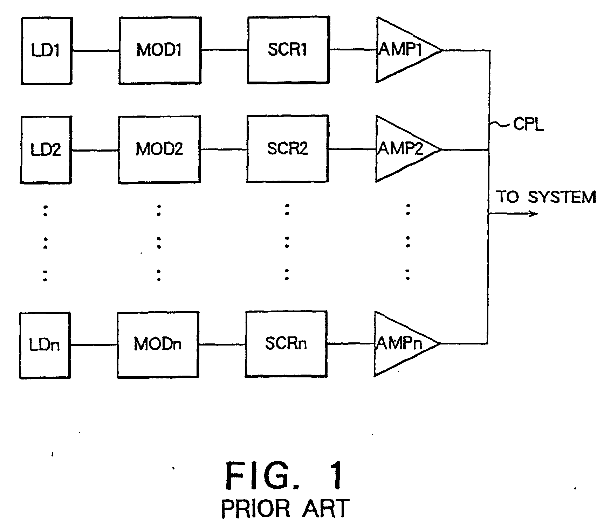

Referring to Fig. 1, description will be made as regards a conventional wavelength division multiplex optical transmitter. optical outputs sent from light sources LDl to LDn are modulated through intensity modulators MODl to MODn and polarization modulators SCRl to SCRn, respectively. Subsequently, the optical signals are amplified through optical amplifiers AMPl to AMPn and then multiplexed through an optical coupler CPL to be fed to a transmission system (see, for example, "ECOC '96" by S. AISAWA, N. TAKACHIO, K. IWASHITA, September 17, 1996, pp. 2,139).

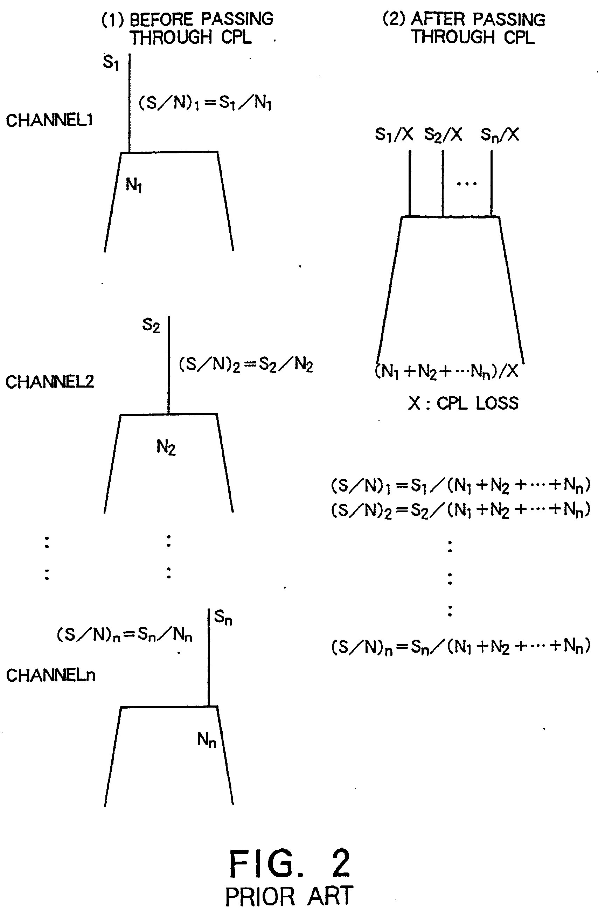

However, in the conventional wavelength division multiplex optical transmitter, there has been a problem that the optical SN (signal-to-noise ratio) is degraded at a transmitting section upon multiplexing the optical signals. The reason for this will be explained hereinbelow using Fig. 2.

Fig. 2 shows optical spectra in the conventional wavelength division multiplex optical transmitter. After amplified through the optical amplifiers, the optical signals of respective channels are multiplexed through the optical coupler. On the other hand, since noises generated by the amplifiers are distributed over the wide range, they are added to each other through the optical coupler. As a result, the optical SN is deteriorated after passing through the optical coupler.

### Summary of the Invention:

It is therefore an object of at least the preferred embodiment of the present invention to provide a wavelength division multiplex optical transmitter which is capable of suppressing degradation of the optical SN upon multiplexing optical signals.

Other such objects will become clear as the description proceeds. as the description proceeds.

A wavelength division multiplex optical transmitter to which this invention is applicable is for multiplexing a plurality of input optical signals to produce an output optical signal. Herein, the input optical signals are different from one another in wavelength. The optical transmitter comprises a plurality of optical modulator sections supplied with the input optical signals for modulating the input optical signals to produce a plurality modulated optical signals, respectively, a plurality of optical amplifiers connected to the n optical modulator sections for amplifying the modulated optical signals to produce a plurality of amplified optical signals, respectively, a plurality of optical band pass filters connected to the optical amplifiers for filtering the amplified optical signals to produce a plurality of filtered optical signals, respectively, and an output side optical coupler connected to the optical band pass filters for multiplexing the filtered optical signals to produce a multiplexed optical signal as the output optical signal.

A method to which this invention is applicable is for multiplexing a plurality of input optical signals to produce an output optical signal. Herein, the input optical signals are different from one another in wavelength. The method comprises the steps of modulating the input optical signals to produce a plurality modulated optical signals, respectively, amplifying the modulated optical signals to produce a plurality of amplified optical signals, respectively, filtering the amplified optical signals to produce a plurality of filtered optical signals, respectively, and multiplexing the filtered optical signals to produce a multiplexed optical signal as the output optical signal.

### Brief Description of the Drawing:

The invention will now be described merely by way of example with reference to the accompanying drawings, wherein:
Fig.1 is a block diagram showing a conventional wavelength multiplex optical transmitter;
Fig. 2 is a diagram showing optical spectra in the conventional wavelength division multiplex optical transmitter of Fig. 1;
Fig. 3 is a block diagram showing a wavelength division multiplex optical transmitter according to a first embodiment of the present invention;
Fig. 4 is a diagram showing optical spectra for explaining the principle of operation of the wavelength division multiplex optical transmitter of Fig. 3;
Fig. 5 is a block diagram showing a wavelength division multiplex optical transmitter according to a second embodiment of the present invention;
Fig. 6 is a block diagram showing a wavelength division multiplex optical transmitter according to a third embodiment of the present invention; and
Fig. 7 is a block diagram showing a wavelength division multiplex optical transmitter according to a fourth embodiment of the present invention.

### Description of the Preferred Embodiments:

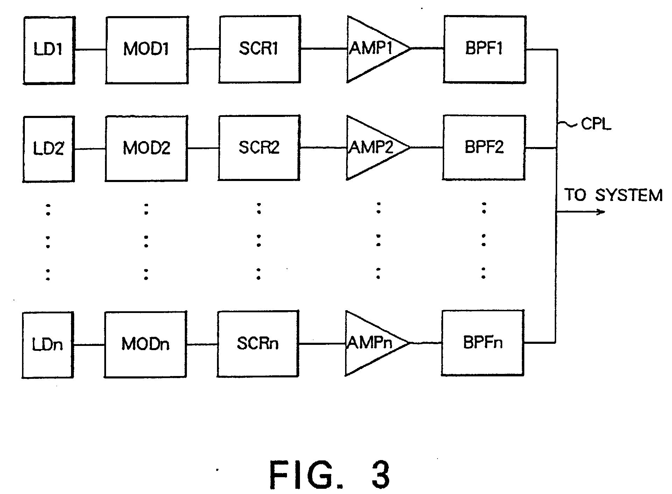

Referring to Fig. 3 description will be made,as regards a wavelength division multiplex optical transmitter according to a first embodiment of the present invention.

The wavelength division multiplex optical transmitter is for multiplexing a plurality of input optical signals to produce an output optical signal. Herein, the input optical signals are outputted from a plurality of or n light sources LDl to LDn and are different from one another in wavelength so as to define various communication channels known in the art.

The optical transmitter comprises a plurality of or n intensity modulators MODl to MODn supplied with the input optical signals for modulating the input optical signals to produce a plurality of or n intensity-modulated signals, respectively, a plurality of or n polarization modulators SCRl to SCRn connected to the intensity modulators MODl to MODn for modulating the intensity-modulated signals to produce a plurality of or n polarization-modulated signals or modulated optical signals, respectively, a plurality of or n optical amplifiers AMPl to AMPn connected to the polarization modulators SCRl to SCRn for amplifying the modulated optical signals to produce a plurality of or n amplified optical signals, respectively, a plurality of or n optical band pass filters BPFl to BPFn connected to the optical amplifiers AMPl to AMPn for filtering the amplified optical signals to produce a plurality of or n filtered optical signals, respectively, and an output side optical coupler CPL connected to the optical band pass filters BPFl to BPFn for multiplexing the filtered optical signals to produce a multiplexed optical signal as the output optical signal. Each of combinations of intensity modulators MODl to MODn and polarization modulators SCRl to SCRn is referred to as an optical modulator sections.

The input optical signals are modulated into the modulated optical signals through the intensity modulators MODl to MODn and the polarization modulators SCRl to SCRn, respectively. Subsequently, the modulated optical signals are amplified into the amplified optical signals through the optical amplifiers AMPl to AMPn, respectively. Then, the amplified optical signals are inputted into the optical band pass filters BPFl to BPFn, respectively. The filtered optical signals having passed through the optical band pass filters BPFl to BPFn are multiplexed into the multiplexed optical signal through the optical coupler CPL and sent as the output optical signal to a transmission system known in the art. Different from Fig. 1, the optical transmitter shown in Fig. 3 is additionally provided with the optical band pass filters BPFl to BPFn subsequent to the optical amplifiers AMPl to AMPn in respective the communication channels.

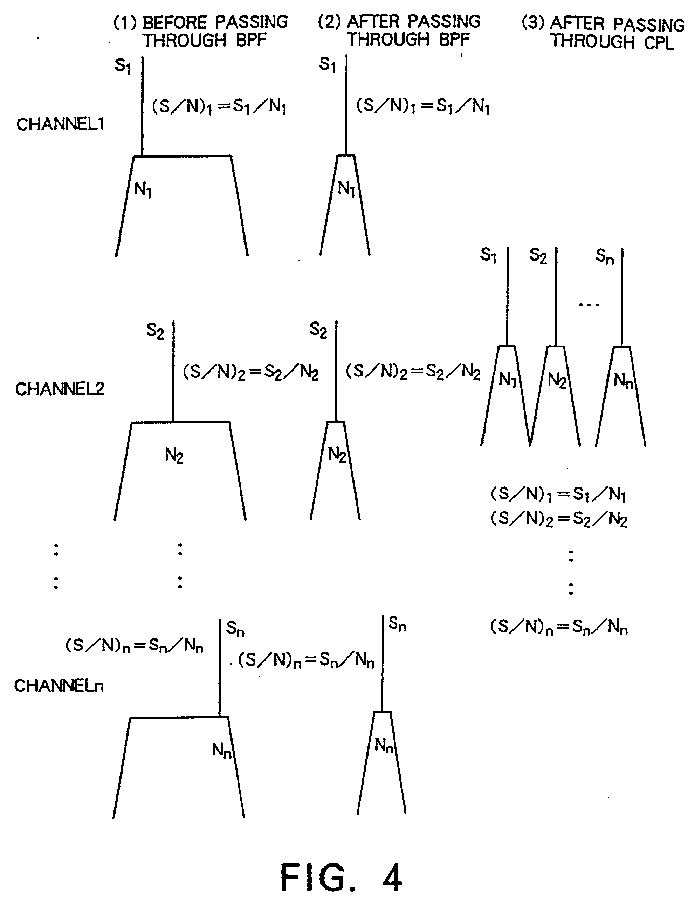

Referring to Fig. 4 together with Fig. 3, the description will be made as regards an operation of the wavelength division multiplex optical transmitter.

As described above, the input optical signals are modulated into the modulated optical signals through the intensity modulators MODl to MODn and the polarization modulators SCRl to SCRn, respectively. Then, the modulated optical signals are amplified into the amplified optical signals through the optical amplifiers AMPl to AMPn, respectively.

In Fig. 4, (1) shows optical spectra of the amplified optical signals in the communication channels. In the amplified optical signals, signal components Sl to Sn exists independently per the communication channels l to n. On the other hand, noise components Nl to Nn exist over the wide range in the communication channels, respectively. Then, the amplified optical signals are supplied to the optical band pass filters BPFl to BPFn, respectively.

In Fig. 4, (2) shows the optical spectra of the filtered optical signal in the communication channels. By operations of the optical band pass filters BPFl to BPFn, each of the noise components Nl to Nn is reduced in the neighborhood of each of the signal components Sl to Sn. Then, the filtered optical signals are multiplexed into the multiplexed optical signal through the optical coupler CPL.

In Fig. 4, (3) shows optical spectra of the multiplexed optical signal. Since each of the noise components Nl to Nn is reduced at a signal band of each communication channel, summing-up of the noise components Nl to Nn is suppressed. As a result, degradation of the optical SN can be reduced at a transmitting section of the optical transmitter.

Returning back to Fig. 3, the description will be directed to a concrete example in which 20 wavelengths are multiplexed.

A DFB laser (signal wavelength range: 1,546 to 1,565nm; wavelength interval: 1nm; optical output: full wavelength + 10dBm) is used as each of the light sources LDl to LDn. An LN modulator (loss: 5dB) is used as each of the intensity modulators MODl to MODn. A polarization scramblers (loss: 6dB) is used as each of the polarization modulators SCRl to SCRn. An Er doped fiber amplifier (EDFA) (gain: 25dB) is used as each of the optical amplifiers AMPl to AMPn. A multilayered film filter (attenuation at a point spacing 1nm from the center wavelength: 20dB) is used as each of the optical band pass filters BPFl to BPFn.

An optical output from the DFB laser is attenuated by 5dB through the LN modulator and by 6dB through the polarization scrambler and thus by 11dB in total, so as to be -1dBm. Then, the optical output is amplified by the EDFA so that signal levels thereof each become +24dBm. On the other hand, assuming that equivalent input noise generated by the EDFA is -40dBm, optical noise level after passing through the EDFA become -15dBm.

Now, the description will be made with a channel 10 (wavelength: 1,555nm) taken as an example. An optical signal amplified by the EDFA becomes +24dBm while an optical noise becomes -15dBm.

Similarly, with respect to a channel 9 (wavelength: 1,554nm), an optical signal becomes +24dBm while an optical noise becomes -15dBm. The optical noise at 1,555nm is reduced by the FG so as to be -35dBm.

Similarly, with respect to a channel 11 (wavelength: 1,556nm), an optical signal becomes +24dBm while an optical noise becomes -15dBm. The optical noise at 1,555nm is reduced by the FG so as to be -35dBm.

As a result, an addition of the optical noise at 1,555nm can be ignored. That is, the degradation of the optical SN is not caused before and after the optical coupler.

With the wavelength division multiplex optical transmitter, since the optical band pass filters are disposed after the optical amplifiers, the optical noise in the neighborhood of each optical signal is reduced. Accordingly, summing-up of the optical noises upon multiplexing the optical signals is suppressed so that the degradation of the optical S/N at the transmitting section can be lowered.

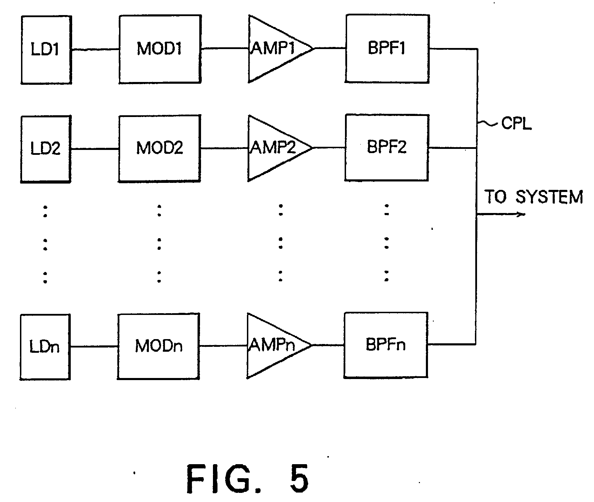

Referring to Fig. 5, the description will be made as regards a wavelength division multiplex optical transmitter according to a second embodiment of this invention. Similar parts are designated by like reference numerals.

In the optical transmitter of Fig. 5, attention should be directed to that omission is carried out about the polarization modulators SCRl to SCRn illustrated in Fig. 3. In this event, each of the intensity modulators MODl to MODn serves as the optical modulator section alone.

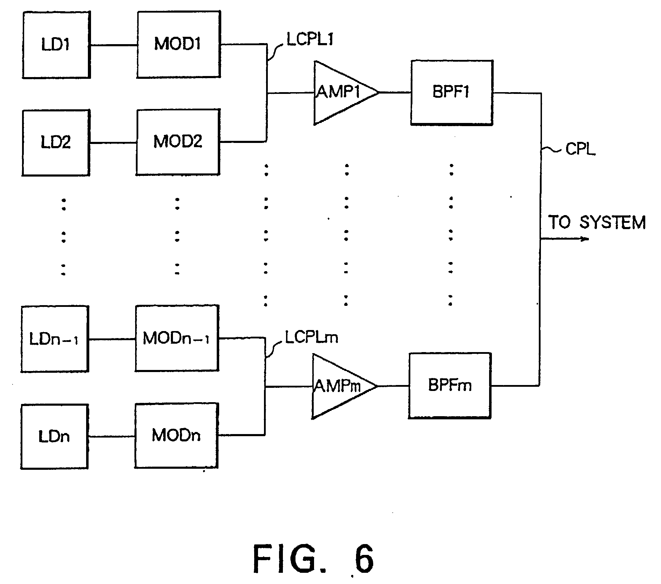

Referring to Fig. 6, the description will be made as regards a wavelength division multiplex optical transmitter according to a third embodiment of this invention. Similar parts are designated by like reference numerals.

The optical transmitter of Fig. 6 comprises, in addition to the intensity modulators MODl to MODn and the output side optical coupler CPLl to CPLn, a plurality of or m local optical couplers LCPLl to LCPLm, a plurality of or m optical amplifiers AMPl to AMPm, and a plurality of or m optical band pass filters BPFI to BPFm. Each of the local optical couplers LCPLl to LCPLm is connected to adjacent two of the intensity modulators MODl to MODn and is for multiplexing the intensity-modulated signals to produce a local multiplexed signal as one of the modulated optical signals. Each of the optical amplifiers AMPl to AMPm is connected to each of the local optical couplers LCPLl to LCPLm and is for amplifying the local multiplexed signal to produce the amplified optical signal. Each of the optical band pass filters BPFl to BPFm is connected to each of the optical amplifiers AMPl to AMPm and is for filtering the amplified optical signal to produce the filtered optical signal.

It will be assumed that the input optical signals from the light sources LDl to LDn are divided into two, namely, a first and a second optical signal. In this event, each of the above-mentioned optical modulator sections comprises a first intensity modulator supplied with the first optical signal for modulating the first optical signal to produce a first intensity-modulated signal, a second intensity modulator supplied with the second optical signal for modulating the second optical signal to produce a second intensity-modulated signal, and a local optical coupler connected to the first and the second intensity modulators and one of the optical amplifiers for multiplexing the first and the second intensity-modulated signals to produce a local multiplexed signal as one of the modulated optical signals.

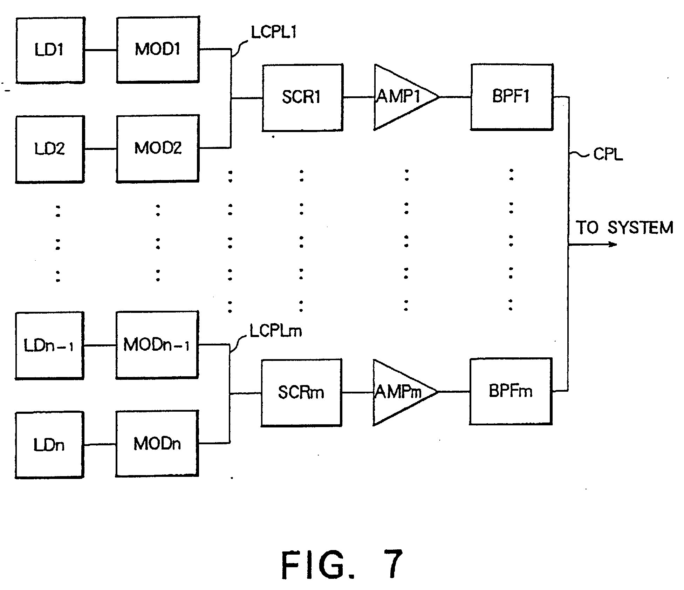

Referring to Fig. 7, the description will be made as regards a wavelength division multiplex optical transmitter according to a fourth embodiment of this invention. Similar parts are designated by like reference numerals.

The optical transmitter of Fig. 6 further comprises a plurality (here m) of polarization modulators SCRl to SCRm. Each of the polarization modulators SCRl to SCRm is connected between each of the local optical coupler LCPLl to LCPLm and each of the optical amplifiers AMPl to AMPm for modulating the local multiplexed signal to produce a polarization-modulated signal as one of the modulated optical signals.

While the present invention has thus far been described in conjunction with a few embodiments thereof, it will be possible for those skilled in the art to put this invention into practice in various other manners. For example, each of the local optical couplers may be connected to adjacent three or more of the intensity modulators.

Each feature disclosed in this specification (which term includes the claims) and/or shown in the drawings may be incorporated in the invention independently of other disclosed and/or illustrated features.

The text of the abstract filed herewith is repeated here as part of the specification:

In a wavelength division multiplex optical transmitter for multiplexing a plurality of input optical signals to produce an output optical signal, use is made of a plurality of optical band pass filters (BPFl-BPFn) each of which is inserted between an optical amplifier (AMPl-AMPn) and an output side optical coupler (CPL). The input optical signals are different from one another in wavelength and are supplied with input optical modulator sections (MODl-MODn, SCRl-SCRn), respectively. The optical modulator sections modulate the input optical signals into a plurality modulated optical signals. The optical amplifiers amplify the modulated optical signals into amplified signals. The optical band pass filters filter the amplified optical signals into filtered optical signals. The output side optical coupler multiplexes the filtered optical signals to produce the output optical signal.

## Claims

1. A wavelength division multiplex optical transmitter for multiplexing a plurality of input optical signals to produce an output optical signal, said input optical signals being different from one another in wavelength, said optical transmitter comprising a plurality (n) of optical modulator sections (MOD1-MODn, SCR1-SCRn) supplied with said input optical signals for modulating said input optical signals to produce a plurality modulated optical signals, respectively, a pluralitv of optical amplifiers (AMPl-AMPn) connected to said optical modulator sections for amplifying said modulated optical signals to produce a plurality of amplified optical signals, respectively, and an output side optical coupler (CPL) for producing said output optical signal, characterized in that said optical transmitter further comprises a plurality of optical band pass filters (BPFl-BPFn) connected to said optical amplifiers for filtering said amplified optical signals to produce a plurality of filtered optical signals, respectively, said output side optical coupler (CPL) being connected to said optical band pass filters for multiplexing said filtered optical signals to produce a multiplexed optical signal as said output optical signal.

2. A wavelength division multiplex optical transmitter as claimed in claim 1, wherein each of said optical modulator sections comprises an intensity modulator (MODl-MODn) connected to one of said optical amplifiers for modulating one of said input optical signals to produce an intensity-modulated signal as one of said modulated optical signals.

3. A wavelength division multiplex optical transmitter as claimed in claim 2, wherein said intensity modulator is an LN modulator.

4. A wavelength division multiplex optical transmitter as claimed in claim 1, wherein each of said optical modulator sections comprises an intensity modulator (MODl-MODn) connected to one of said optical amplifiers for modulating one of said input optical signals to produce an intensity-modulated signal, and a polarization modulator (SCRl-SCRn) connected to said intensity modulator and one of said optical amplifiers for modulating said intensity-modulated signal to produce a polarization-modulated signal as one of said modulated optical signals.

5. A wavelength division multiplex optical transmitter as claimed in claim 4, wherein said intensity modulator is an LN modulator, said polarization modulator being a polarization scrambler.

6. A wavelength division multiplex optical transmitter as claimed in claim 1, each of said input optical signals having a first and a second optical signal different from each other in said wavelength, wherein each of said optical modulator sections comprises a first intensity modulator (MODl) supplied with said first optical signal for modulating said first optical signal to produce a first intensity-modulated signal, a second intensity modulator (MOD2) supplied with said second optical signal for modulating said second optical signal to produce a second intensity-modulated signal, and a local optical coupler (LCPLl) connected to said first and said second intensity modulators and one of said optical amplifiers for multiplexing said first and said second intensity-modulated signals to produce a local multiplexed signal as one of said modulated optical signals.

7. A wavelength division multiplex optical transmitter as claimed in claim 1, each of said input optical signals having a first and a second optical signal different from each other in said wavelength, wherein each of said optical modulator sections comprises a first intensity modulator (MOD1).
for modulating said first optical signal to produce a first intensity-modulated signal, a second intensity modulator (MOD2)
for modulating said second optical signal to produce a second intensity-modulated signal, a local optical coupler (LCPLl) connected to said first and said second intensity modulators and one of said optical amplifiers for multiplexing said first and said second intensity-modulated signals to produce a local multiplexed signal, and a polarization modulator (SCRl) connected to said local optical coupler and one of said optical amplifiers for modulating said local multiplexed signal to produce a polarization-modulated signal as one of said modulated optical signals.

8. A wavelength division multiplex optical transmitter as claimed in claim 1, wherein each of said optical amplifiers is an Er doped fiber amplifier.

9. A wavelength division multiplex optical transmitter as claimed in claim 1, wherein each of said optical band pass filters is a multilayered film filter.

10. A method of multiplexing a plurality of input optical signals to produce an output optical signal, said input optical signals being different from one another in wavelength, characterized in that said method comprises the steps of:
modulating said input optical signals to produce a plurality modulated optical signals, respectively;
amplifying said modulated optical signals to produce a plurality of amplified optical signals, respectively;
filtering said amplified optical signals to produce a plurality of filtered optical signals, respectively; and
multiplexing said filtered optical signals to produce a multiplexed optical signal as said output optical signal.

11. A method as claimed in claim 10, wherein the modulating step comprises the step of intensity-modulating said input optical signals to produce said modulated optical signals.

12. A method as claimed in claim 10, wherein the modulating step comprises the steps of:
intensity-modulating said input optical signals to produce a plurality of intensity-modulated signals; and
polarization-modulating said intensity-modulated signals to produce said modulated optical signals

13. A method as claimed in claim 10, each of said input optical signals having a first and a second optical signal different from each other in said wavelength, wherein the modulating step comprises the steps of:
intensity-modulating said first optical signal to produce a first intensity-modulated signal;
intensity-modulating said second optical signal to produce a second intensity-modulated signal; and
multiplexing said first and said second intensity-modulated signals to produce said modulated optical signals.

14. A method as claimed in claim 10, each of said input optical signals having a first and a second optical signal different from each other in said wavelength, wherein the modulating step comprises the steps of:
intensity-modulating said first optical signal to produce a first intensity-modulated signal;
intensity-modulating said second optical signal to produce a second intensity-modulated signal;
multiplexing said first and said second intensity-modulated signals to produce a local multiplexed signal; and
polarization-modulating said local multiplexed signal to produce said modulated optical signals.
